# NEUE EUROPÄISCHE PATENTSCHRIFT

(11) **EP 3 146 825 B2**
(45) Veröffentlichungstag und Bekanntmachung des Hinweises auf die Entscheidung über den Einspruch: **07.01.2026**
(45) Hinweis auf die Patenterteilung: 11.08.2021
(21) Anmeldenummer: 16176887.4
(22) Anmeldetag: 29.06.2016
(51) Int. Cl.: A01B 69/04

(54) **FAHRERASSISTENZSYSTEM FÜR EINE LANDWIRTSCHAFTLICHE ARBEITSMASCHINE**
OPERATOR ASSISTANCE SYSTEM FOR AN AGRICULTURAL WORK MACHINE
SYSTÈME D'ASSISTANCE DU CONDUCTEUR POUR MACHINE DE TRAVAIL AGRICOLE

(30) Priorität: 15.09.2015 DE 102015115510
(43) Veröffentlichungstag der Anmeldung: 29.03.2017
(73) Patentinhaber: CLAAS Selbstfahrende Erntemaschinen GmbH, 33428 Harsewinkel (DE)
(72) Erfinder: Fischer, Frédéric, 59823 Arnsberg (DE); Krause, Thilo, 39249 Glinde (DE); Kriebel, Bastian, 48155 Münster (DE)
(74) Vertreter: CLAAS Gruppe

(56) Entgegenhaltungen:
- EP-A1- 2 954 772
- DE-A1- 102009 041 646
- DE-A1- 102013 011 152
- M. BERGERMANN ET AL.: "Results with Autonomous Vehicles Operating in Specialty Crops", IEEE INTERNATIONAL CONFERENCE ON ROBOTICS AND AUTOMATION, 2012, Minnesota, USA, XP055908234

## Beschreibung

Die Erfindung betrifft ein Fahrerassistenzsystem für eine landwirtschaftliche Arbeitsmaschine gemäß dem Oberbegriff von Anspruch 1 sowie ein Verfahren für den Betrieb einer landwirtschaftlichen Arbeitsmaschine gemäß dem Oberbegriff von Anspruch 15.

In der Landwirtschaft ist es bekannt, verschiedene Abläufe automatisiert oder teilautomatisiert ablaufen zu lassen. Dies betrifft einerseits die Lenkung und die Bewegung einer landwirtschaftlichen Arbeitsmaschine und andererseits die Steuerung der an der Arbeitsmaschine angebrachten Arbeitsgeräte. Hierfür ist die Arbeitsmaschine mit einem in Rede stehenden Fahrerassistenzsystem ausgestattet.

Das bekannte Fahrerassistenzsystem (DE 10 2013 011 152 A1), von dem die Erfindung ausgeht, ist mit einer Spurführungssteuerung ausgestattet, die Lenkbefehle für die Arbeitsmaschine basierend auf einem Satelliten-gestützten Navigationssystem erzeugt. Die Spurführungssteuerung erlaubt ein entsprechend sensorgestütztes Abfahren einer Wendefahrspur im Rahmen des Wendevorgangs, was grundsätzlich ein genaues Einhalten einer geplanten Wendefahrspur ermöglicht, die im Folgenden als "Plan-Wendefahrspur" bezeichnet wird. Problematisch wird es allerdings, wenn es beim Wendevorgang durch die jeweiligen Bodeneigenschaften zu Schlupf und Drift kommt und gleichzeitig die Genauigkeit des Navigationssystems absinkt oder wenn die Lage der Ziel-Arbeitsfahrspur, in der die Wendefahrspur münden soll, von der ursprünglich geplanten Lage abweicht. Im ungünstigsten Fall verbleibt im Feldbestand ein unbearbeiteter Streifen, so dass die Effektivität der Bearbeitung eingeschränkt ist. Ein weiteres Fahrerassistenzsystem ist aus DE102009041646 A1 bekannt.

Der Erfindung liegt das Problem zugrunde, das bekannte Fahrerassistenzsystem derart auszugestalten und weiterzubilden, dass die Effektivität bei der Bearbeitung erhöht wird.

Das obige Problem wird bei einem Fahrerassistenzsystem gemäß dem Oberbegriff von Anspruch 1 durch die Merkmale des kennzeichnenden Teils von Anspruch 1 gelöst.

Wesentlich ist die grundsätzliche Überlegung, dass das Einfahren der Arbeitsmaschine in den Feldbestand im Rahmen eines Wendevorgangs mit den besten Ergebnissen basierend auf dem lokal arbeitenden Bestandskantensensor durchgeführt werden kann, und zwar unabhängig davon, auf welche Sensoren die Spurführungssteuerung im Rahmen der Bearbeitung des Feldbestands zurückgreift. Dies liegt daran, dass der Bestandskantensensor die Positionsinformation enthält, die allein maßgeblich für das genaue "Einfädeln" der Arbeitsmaschine in die Arbeitsfahrspur maßgeblich ist.

Mit der Nutzung des Bestandskantensensors im Rahmen des Wendevorgangs wird erreicht, dass die Ziel-Arbeitsfahrspur unabhängig von jeglichen unvorhersehbaren Einflüssen jederzeit genau angefahren wird. Dies gilt speziell für die Fälle, in denen während des Abfahrens der Wendefahrspur unvorhersehbare Faktoren wie Schlupf oder Drift der Arbeitsmaschine im Vorgewendebereich auftreten, in denen Ungenauigkeiten im Lenksystem auftreten oder in denen sich die tatsächliche Lage der Ziel-Arbeitsfahrspur verschoben hat.

Grundsätzlich kann es vorteilhaft sein, die Bearbeitung des Feldbestands basierend auf einem insbesondere Satelliten-gestützten Navigationssystem vorzunehmen, wobei die Spurführungssteuerung im Rahmen des Wendevorgangs zum Ausrichten der Arbeitsmaschine auf den Bestandskantensensor, vorzugsweise allein auf den Bestandskantensensor, umschaltet (Anspruch 2). Dies trägt dem Umstand Rechnung, dass selbst ein aufwendiges Navigationssystem nicht an die mit dem Bestandskantensensor erreichbare Genauigkeit beim Ausrichten der Arbeitsmaschine herankommt.

Bei der besonders bevorzugten Ausgestaltung gemäß Anspruch 3 ist erkannt worden, dass Komponenten der Spurführungssteuerung doppelt genutzt werden können, hier der Bestandskantensensor. Im Rahmen des Bearbeitens des Feldbestands dient der Bestandskantensensor vorzugsweise dem Erfassen der jeweiligen Bestandskante, entlang der eine Arbeitsfahrspur abgefahren werden soll. Im Rahmen des Wendevorgangs dagegen wird wie oben angesprochen basierend auf dem Erfassen einer Referenz-Bestandskante der Ausrichtvorgang durchgeführt, in dem die Arbeitsmaschine auf die Ziel-Arbeitsfahrspur ausgerichtet wird.

Bei der besonders bevorzugten Ausgestaltung gemäß Anspruch 4 ergibt sich ein automatisiertes Abfahren der jeweiligen Fahrspuren, insbesondere der Wendefahrspuren, indem die Lenkbefehle über einen Lenkantrieb umgesetzt werden.

Alternativ oder zusätzlich kann es vorgesehen sein, dass die Lenkbefehle teilautomatisiert durchgeführt werden. Hierfür ist es gemäß Anspruch 5 vorgesehen, dass eine Mensch-Maschine-Schnittstelle die erzeugten Lenkbefehle zur benutzerseitigen Umsetzung ausgibt.

Die weiter bevorzugten Ausgestaltungen gemäß den Ansprüchen 7 bis 9 betreffen bevorzugte Ausgestaltungen der Wendefahrspur, die je nach der Lage der Arbeitsfahrspuren, der Arbeitsbreite der Arbeitsmaschine und dem minimalen Lenkradius der Arbeitsmaschine unterschiedlich sein kann.

Die weiter bevorzugten Ausgestaltungen gemäß den Ansprüchen 10 und 11 zeigen, dass der Ausrichtvorgang, insbesondere die Erfassung der jeweiligen Referenz-Bestandskante, in unterschiedlichen Abschnitten der Wendefahrspur ausgelöst werden kann. Einerseits muss die Referenz-Bestandskante bereits im Erfassungsbereich des Bestandskantensensors liegen. Andererseits muss noch ein hinreichender Weg zwischen der aktuellen Position der Arbeitsmaschine und dem Vorgewendepunkt, in dem die Arbeitsmaschine in den Feldbestand eintritt, verbleiben, um eventuelle Lenckorrekturen durchführen zu können.

Die weiter bevorzugte Ausgestaltung gemäß Anspruch 14 sieht vor, dass das Wende-Planungssystem vorgesehen ist, das aus der Arbeitsbreite (2b) der Arbeitsmaschine (2), dem minimalen Lenkradius der Arbeitsmaschine (2) und der Lage der Ausgangs-Arbeitsfahrspur (4a) und der Ziel-Arbeitsfahrspur (4b) eine Plan-Wendefahrspur (7a) erzeugt und dass die Spurführungssteuerung (5) im Rahmen des Wendevorgangs die Plan-Wendefahrspur (7a) basierend auf der Erfassung der Referenz-Bestandskante (9b) auf die tatsächliche Lage der Ziel-Arbeitsfahrspur (4b) abgleicht. Damit wird die offline erzeugte Plan-Wendefahrspur auf die tatsächlichen geometrischen Verhältnisse im Feldbestand abgeglichen. Einerseits lässt sich dadurch die Wendefahrspur auf die betreffenden Parameter der Arbeitsmaschine hin optimieren, was im Offline-Betrieb am leichtesten möglich ist. Andererseits ergeben sich keine für eine Offline-Erzeugung von Fahrspuren typischen, geometrischen Abweichungen zu den tatsächlichen geometrischen Gegebenheiten.

Nach einer weiteren Lehre gemäß Anspruch 15, der eigenständige Bedeutung zukommt, wird ein Verfahren für den Betrieb einer vorschlagsgemäßen landwirtschaftlichen Arbeitsmaschine als solches beansprucht. Auf alle Ausführungen zu der Betriebsweise der landwirtschaftlichen Arbeitsmaschine darf verwiesen werden.

Im Folgenden wird die Erfindung anhand einer lediglich ein Ausführungsbeispiel darstellenden Zeichnung näher erläutert. In der Zeichnung zeigt
- Fig. 1: eine landwirtschaftliche Arbeitsmaschine mit einem vorschlagsgemäßen Fahrerassistenzsystem während des Bearbeitens des Feldbestands,
- Fig. 2: die Arbeitsmaschine gemäß Fig. 1 während des Wendevorgangs, und

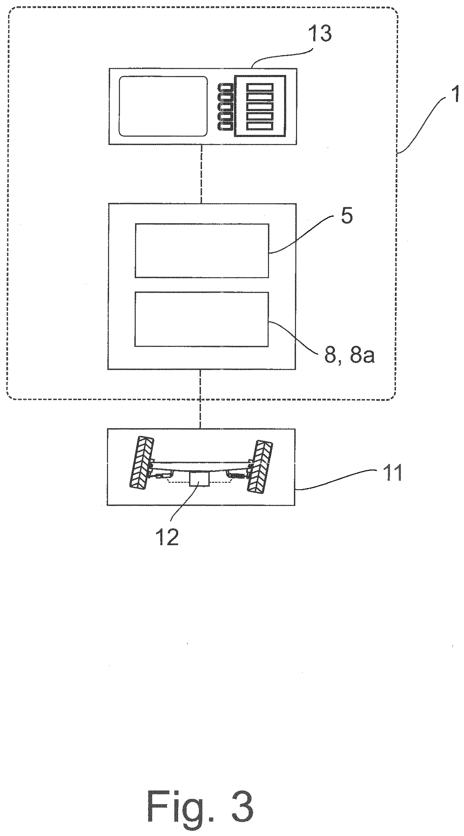

- Fig. 3: den strukturellen Aufbau des Fahrerassistenzsystems gemäß Fig. 1.

Das vorschlagsgemäße Fahrerassistenzsystem 1 lässt sich auf alle landwirtschaftlichen Arbeitsmaschinen 2 anwenden, mit denen ein Bearbeiten eines Feldbestands 3 in einer Vielzahl von nebeneinander verlaufenden Arbeitsfahrspuren 4 möglich ist, wobei der Wechsel von einer Arbeitsfahrspur 4 zu einer nächsten Arbeitsfahrspur einen Wendevorgang erfordert.

Hier und vorzugsweise handelt es sich bei der Arbeitsmaschine 2 um einen Mähdrescher oder um einen Feldhäcksler. Die Arbeitsmaschine 2 ist mit einem Vorsatzgerät 2a ausgestattet, das die Arbeitsbreite 2b der Arbeitsmaschine 2 definiert. Bei der als Mähdrescher ausgestalteten Arbeitsmaschine 2 umfasst das Vorsatzgerät 2a u.a. ein Schneidwerk zum Schneiden der im Feldbestand 3 vorhandenen Pflanzen. In diesem Fall wird im Rahmen der Bearbeitung durch das Abfahren der Arbeitsfahrspuren 4 laufend eine neue Bestandskante 9 erzeugt.

Für die Durchführung eines obigen Wendevorgangs ist das Fahrerassistenzsystem 1 mit einer Spurführungssteuerung 5 ausgestattet. Die Spurführungssteuerung 5 erzeugt im Rahmen des Wendevorgangs Lenkbefehle für die Arbeitsmaschine 2, welche die Basis für das automatische oder teilautomatische Wenden der Arbeitsmaschine 2 bilden. Das Wenden der Arbeitsmaschine 2 findet vorschlagsgemäß in einem Vorgewendebereich 6 statt, der sich an einem Rand des Feldbestands 3 befindet, in dem die Arbeitsfahrspuren 4 nebeneinander münden.

Der Wendevorgang umfasst ein sensorgestütztes Abfahren einer Wendefahrspur 7 zwischen einer Ausgangs-Arbeitsfahrspur 4a und einer hierzu versetzten Ziel-Arbeitsfahrspur 4b, die eine zu der Ausgangs-Arbeitsfahrspur 4a entgegen gesetzte Fahrtrichtung aufweist. Der Versatz der Arbeitsfahrspuren 4 zueinander ist hier im Wesentlichen quer zu der Erstreckung der jeweiligen Arbeitsfahrspur 4 vorgesehen. Die Arbeitsfahrspuren 4 sind vorzugsweise in erster Näherung gerade ausgebildet.

Die Spurführungssteuerung 5 erzeugt die obigen Lenkbefehle für die Arbeitsmaschine 2 als Basis für das sensorgestützte Abfahren der Wendefahrspur 7. Die Sensorunterstützung beim Abfahren der Wendefahrspur 7 wird weiter unten näher erläutert.

Vorschlagsgemäß ist ein Bestandskantensensor 8 zum Erfassen von Bestandskanten 9 im Feldbestand 3 vorgesehen, der vorzugsweise in mehrfacher Hinsicht genutzt wird. Diese Doppelnutzung wurde weiter oben angesprochen.

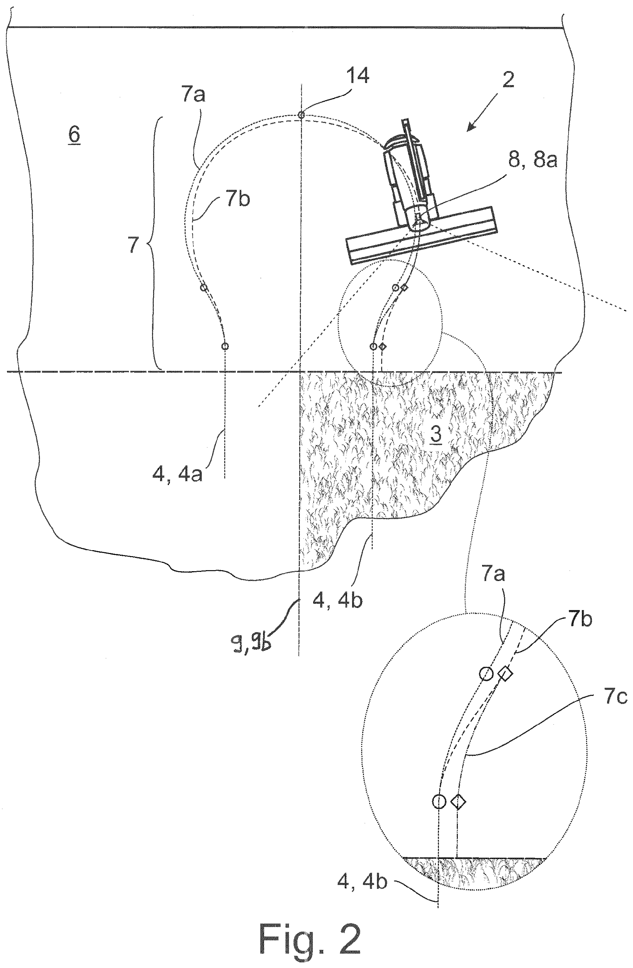

Die Spurführungssteuerung 5 erzeugt, wie ebenfalls oben angesprochen, Lenkbefehle für die Arbeitsmaschine 2 im Rahmen des Wendevorgangs. Wesentlich dabei ist nun, dass die Spurführungssteuerung 5 im Rahmen des Wendevorgangs einen Ausrichtvorgang durchführt, in dem sie mittels des Bestandskantensensors 8 eine Referenz-Bestandskante 9b des Feldbestands 3 erfasst und darauf basierend zum Ausrichten der Arbeitsmaschine 2 auf die Ziel-Arbeitsfahrspur 4b Lenkbefehle für die Arbeitsmaschine 2 erzeugt. Die Arbeitsmaschine 2 während des Ausrichtvorgangs ist in Fig. 2 dargestellt. Hier wird deutlich, dass während des Abfahrens der Wendefahrspur 7 das Fahrerassistenzsystem 2 mittels des Bestandskantensensors 8 die Lage der Referenz-Bestandskante 9b erfasst und die Arbeitsmaschine 2 durch die Erzeugung entsprechender Lenkbefehle auf den Anfang der Ziel-Arbeitsfahrspur 4b ausrichten kann. Dadurch ist ein punktgenaues Hereinfahren der Arbeitsmaschine 2 in die jeweilige Ziel-Arbeitsfahrspur 4b möglich.

Vorzugsweise erzeugt die Spurführungssteuerung 5 Lenkbefehle für die Arbeitsmaschine 2 auch im Rahmen des Bearbeitens des Feldbestands 3. Beispielsweise ist es so, dass die Spurführungssteuerung 5 im Rahmen des Bearbeitens des Feldbestands 3 das Abfahren der Arbeitsfahrspuren 4 auf globale Positionsinformationen eines insbesondere Satelliten-gestützten Navigationssystems stützt und im Rahmen des Wendevorgangs zum Ausrichten der Arbeitsmaschine 2 auf den lokal arbeitenden Bestandskantensensor (8) umschaltet. Der Begriff "global" bedeutet hier, dass das Navigationssystem zur Positionsbestimmung keine Erfassung lokaler Merkmale der unmittelbaren Umgebung der Arbeitsmaschine 2 vornimmt, sondern vielmehr Positionsinformationen mit einem globalen Bezugssystem, wie beispielsweise eine Positionsinformationen in geografischen Längen- und Breitengraden.

Alternativ oder zusätzlich kann es vorgesehen sein, dass die Spurführungssteuerung 5 im Rahmen des Bearbeitens des Feldbestands 3 Lenkbefehle basierend auf der Erfassung einer Bestandskante 9a durch den Bestandskantensensor 8 erzeugt, nämlich zum sensorgestützten Abfahren von Arbeitsfahrspuren 4 entlang der betreffenden Bestandskante 9a.

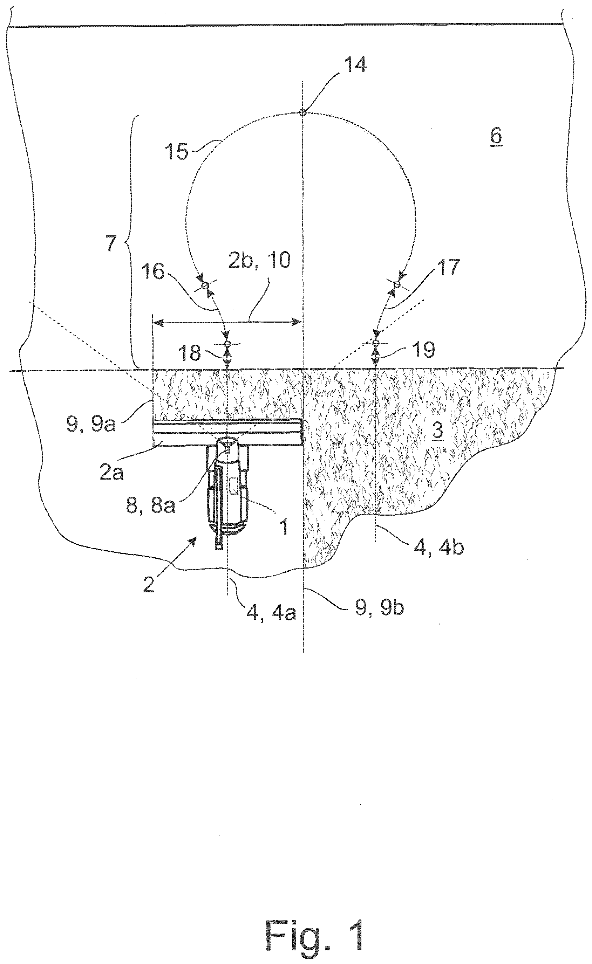

Der obige Versatz der Ziel-Arbeitsfahrspur 4b zu der Ausgangs-Arbeitsfahrspur 4a kann je nach Bearbeitungsstrategie unterschiedlich sein. Bei der in den Fig. 1 und 2 dargestellten Situation ist es so, dass die Ziel-Arbeitsfahrspur 4b um eine Spurbreite 10 zu der Ausgangs-Arbeitsfahrspur 4a versetzt ist, so dass die Ziel-Arbeitsfahrspur 4b und die Ausgangs-Arbeitsfahrspur 4a unmittelbar benachbart zueinander gelegen sind. Denkbar ist aber auch, dass die Ziel-Arbeitsfahrspur 4b um eine Anzahl von Spurbreiten 10 zu der Ausgangs-Arbeitsfahrspur 4a versetzt ist. Die Spurbreite 10 wird hier durch die Arbeitsbreite 2b des Vorsatzgerätes 2a bestimmt.

Die Referenz-Bestandskante 9b, deren Erfassung die Basis für den Ausrichtvorgang im Rahmen des Wendevorgangs bildet, ist vorzugsweise eine durch das im Rahmen der Bearbeitung erfolgte Abfahren der Ausgangs-Arbeitsfahrspur 4a erzeugte Bestandskante. Grundsätzlich kann es sich bei der Referenz-Bestandskante 9b aber auch um irgendeine andere Bestandskante handeln, die sich im Erfassungsbereich des Bestandskantensensors 8 befindet.

Die von der Spurführungssteuerung 5 erzeugten Lenkbefehle können auf ganz unterschiedliche Weise genutzt werden. Beispielsweise kann ein der Arbeitsmaschine 2 zugeordnetes Lenksystem 11 mit einem Lenkantrieb 12 vorgesehen sein, der die erzeugten Lenkbefehle in Lenkbewegungen umsetzt. Damit ist ein automatisches Durchführen des Wendevorgangs möglich.

Alternativ oder zusätzlich kann eine Mensch-Maschine-Schnittstelle 13 vorgesehen sein, über die die erzeugten Lenkbefehle zur benutzerseitigen Umsetzung ausgebbar sind. Beispielsweise kann die Spurführungssteuerung 5 Korrekturvorgaben für eine manuelle Lenkung über die Mensch-Maschine-Schnittstelle 13 ausgeben, die der Benutzer entsprechend manuell umsetzt.

Für den geometrischen Verlauf der Wendefahrspur 7 sind zahlreiche vorteilhafte Varianten denkbar. Es lässt sich den Darstellungen der Fig. 1 und 2 entnehmen, dass der Wendevorgang das Abfahren einer Wendefahrspur 7 mit einem Scheitelpunkt 14 umfasst, in dem sich der Fahrtrichtungsanteil entlang der Ausgangs-Arbeitsfahrspur 4a umkehrt. Der Scheitelpunkt 14 ist also der Punkt, in dem sich die Arbeitsmaschine 2 nicht mehr vom Feldbestand 3 weg, sondern zu dem Feldbestand 3 hin bewegt.

Die Wendefahrspur 7 kann so verlaufen, dass sie in einem Zug abgefahren werden kann. Denkbar ist aber auch, dass der Wendevorgang ein Wenden in mehreren Zügen vorsieht. Dies bedeutet, dass die Arbeitsmaschine 2 im Rahmen des Wendevorgangs mindestens einmal zurückgesetzt wird, um die Ausdehnung der Wendefahrspur 7 zu reduzieren. Der Ausrichtvorgang lässt sich uneingeschränkt auf das Wenden in mehreren Zügen anwenden.

Die Wendefahrspur 7 weist vorzugsweise einen den Scheitelpunkt 14 umfassenden, hier und vorzugsweise zumindest zum Teil kreisförmigen Bogenabschnitt 15 auf, in dem das eigentliche Wenden der Arbeitsmaschine 2 stattfindet.

Der Bogenabschnitt 15 schließt sich, wie in Fig. 2 dargestellt, über einen ersten, hier und vorzugsweise gebogenen Übergangsabschnitt 16 an die Ausgangs-Arbeitsfahrspur 4a an, während sich im weiteren Verlauf der Wendefahrspur 7 die Ziel-Arbeitsfahrspur 4b über einen zweiten, hier und vorzugsweise gebogenen, Übergangsabschnitt 17 an den Bogenabschnitt 15 anschließt.

Der erste Übergangsabschnitt 16 wiederum schließt sich hier und vorzugsweise an einen geraden Ausfahrabschnitt 18 an, in dem die Arbeitsmaschine 2 aus der Ausgangs-Arbeitsfahrspur 4a ausfährt. Weiter schließt sich an den zweiten Übergangsabschnitt 17 im weiteren Verlauf der Wendefahrspur 7 ein gerader Einfahrabschnitt 19 an, in dem die Arbeitsmaschine 2 in die Ziel-Arbeitsfahrspur 4b einfährt.

Bei der in den Fig. 1 und 2 dargestellten Situation ergibt sich im Ergebnis eine Wendefahrspur 7 in der Form des griechischen Buchstabens Ω. Dies liegt daran, dass der erste Übergangsabschnitt 16 ein Abschnitt des Herauslenkens der Arbeitsmaschine 2 und der zweite Übergangsabschnitt 17 ein Abschnitt des Hereinlenkens der Arbeitsmaschine 2 ist. Das Herauslenken und Hereinlenken ermöglicht den Anschluss der eng nebeneinander liegenden Arbeitsfahrspuren 4a, 4b an einen Bogenabschnitt 15 mit beliebig großem Radius.

Der Ausrichtvorgang kann in Abhängigkeit von der Auslegung des Bestandskantensensors 8 an unterschiedlichen Stellen des Wendevorgangs ausgelöst werden. Hier und vorzugsweise ist es so, dass der Ausrichtvorgang, insbesondere die Erfassung der Referenz-Bestandskante 9b, erst nach dem Überfahren des Scheitelpunkts 14 ausgelöst wird. Dies trägt dem Umstand Rechnung, dass der Erfassungsbereich des Bestandskantensensors 8 regelmäßig im vorderen Bereich der Arbeitsmaschine 2 gelegen ist, um während des Bearbeitens den zukünftigen Verlauf der Bestandskante 9a erfassen zu können. Um sicherzustellen, dass während des Ausrichtvorgangs eine belastbare Erfassung der Referenz-Bestandskante 9b möglich ist, wird der Ausrichtvorgang, insbesondere die Erfassung der Referenz-Bestandskante 9b, im zweiten Übergangsabschnitt 17 ausgelöst.

Der Bestandskantensensor 8 kann nach unterschiedlichen Messprinzipien arbeiten. Vorzugsweise ist es so, dass der Bestandskantensensor 8 ein laserbasierter Abstandssensor ist. Dabei kann es vorgesehen sein, dass ein Laserstrahl gezielt über einen vorbestimmten Winkelbereich geführt wird, um die jeweilige Bestandskante 9 zu erfassen. Alternativ dazu kann es vorgesehen sein, dass der Bestandskantensensor 8 nach Art eines Laserscanners arbeitet, der den Erfassungsbereich zyklisch überstreicht.

Alternativ kann es vorgesehen sein, dass der Bestandskantensensor 8 ein kamerabasierter Sensor ist. Der Vorteil eines kamerabasierten Sensors besteht darin, dass auf eine Strahlführungsvorrichtung, die bei einem laserbasierten Abstandssensor notwendig ist, verzichtet werden kann. Vorzugsweise handelt es sich bei dem kamerabasierten Sensor um einen 3D-Sensor, so dass wiederum Abstände ermittelbar sind. Andere Messprinzipien können für den Bestandskantensensor 8 Anwendung finden.

Vorzugsweise ist dem Fahrerassistenzsystem 1 nicht nur die Spurführungssteuerung 5 zugeordnet, sondern auch ein Wende-Planungssystem, das aus verschiedenen Parametern, insbesondere aus der Arbeitsbreite 2b der Arbeitsmaschine 2, dem minimalen Lenkradius der Arbeitsmaschine 2 und der Feldgeometrie eine Plan-Wendefahrspur 7a erzeugt, wobei die Spurführungssteuerung 5 im Rahmen des Wendevorgangs die Plan-Wendefahrspur 7a basierend auf der Erfassung der Referenz-Bestandskante 9b auf die tatsächliche Lage der Ziel-Arbeitsfahrspur 4b abgleicht. Im Ergebnis fährt die Arbeitsmaschine 2 die Ist-Wendefahrspur 7b ab, die durch den obigen Abgleich in die tatsächliche Ziel-Arbeitsfahrspur 4b mündet. Ohne den vorschlagsgemäßen Abgleich würde die Ist-Wendefahrspur 7c abgefahren, wie in Fig. 2 beispielhaft dargestellt. Im letztgenannten Fall würde ein unbearbeiteter Streifen im Feldbestand verbleiben, was die Effektivität bei der Bearbeitung entsprechend reduzieren würde.

Die Plan-Wendefahrspur 7a wird von dem Wende-Planungssystem, vorzugsweise im Offline-Betrieb, also zeitlich dem tatsächlichen Wendevorgang vorgelagert, ermittelt. Dabei kann die Geometrie der Wendefahrspur 7a optimal auf die jeweils relevanten Parameter, insbesondere auf die Maschinen- und Umgebungsparameter hin optimiert werden. Der Abgleich dieser Plan-Wendefahrspur 7a ist notwendig, um die Plan-Wendefahrspur 7a auf eine eventuelle Verschiebung der Arbeitsfahrspuren 4 anzupassen. Dies erfolgt online, also während des Wendevorgangs. Die Strukturierung der Steuerung des Wendevorgangs in einen Offline-Abschnitt und in einen Online-Abschnitt führt zu einem zeiteffizienten Verfahren, da alle Planungsschritte, die nicht notwendigerweise online erfolgen müssen, im Offline-Betrieb durchgeführt werden.

Nach einer weiteren Lehre, der ebenfalls eigenständige Bedeutung zukommt, wird das beschriebene Verfahren für den Betrieb der vorschlagsgemäßen, landwirtschaftlichen Arbeitsmaschine 2 als solches beansprucht. Für die Durchführung des Verfahrens sind ein Bestandskantensensor 8 sowie eine Spurführungssteuerung 5 vorgesehen, wobei mittels der Spurführungssteuerung 5 im Rahmen des Bearbeitens des Feldbestands 3 zum sensorgestützten Abfahren von Arbeitsfahrspuren 4 entlang einer jeweiligen Bestandskante 9 basiert auf der Erfassung der Bestandskante 9 Lenkbefehle für die Arbeitsmaschine 2 erzeugt werden und wobei im Rahmen eines Wendevorgangs in einem Vorgewendebereich 6 mittels der Spurführungssteuerung 5 zum sensorgestützten Abfahren einer Wendefahrspur zwischen einer Ausgangs-Arbeitsfahrspur 4a und einer hierzu versetzten Ziel-Arbeitsfahrspur 4b mit entgegengesetzter Fahrtrichtung Lenkbefehle für die Arbeitsmaschine 2 erzeugt werden.

Wesentlich für das vorschlagsgemäße Verfahren ist, wie ebenfalls weiter oben erläutert, dass mittels der Spurführungssteuerung 5 im Rahmen des Wendevorgangs ein Ausrichtvorgang durchgeführt wird, in dem mittels des Bestandskantensensors 8 eine Referenz-Bestandskante 9b des Feldbestands 3 erfasst wird und darauf basierend zum Ausrichten der Arbeitsmaschine 2 auf die Ziel-Arbeitsfahrspur 4b Lenkbefehle für die Arbeitsmaschine 2 erzeugt werden. Im Übrigen darf auf alle Ausführungen zu dem vorschlagsgemäßen Fahrerassistenzsystem 1 verwiesen werden, sofern diese geeignet sind, den vorschlagsgemäßen Betrieb der landwirtschaftlichen Arbeitsmaschine 2 zu erläutern.

### Bezugszeichenliste

- 1: Fahrerassistenzsystem
- 2: Arbeitsmaschine
- 2a: Vorsatzgerät
- 2b: Arbeitsbreite
- 3: Feldbestand
- 4: Arbeitsfahrspur
- 4a: Ausgangs-Arbeitsfahrspur
- 4b: Ziel-Arbeitsfahrspur
- 5: Spurführungssteuerung
- 6: Vorgewendebereich
- 7: Wendefahrspur
- 7a: Plan-Wendefahrspur
- 7b: Ist-Wendefahrspur (abgeglichen)
- 7c: Ist-Wendefahrspur (nicht abgeglichen)
- 8: Bestandskantensensor
- 8a,b: Sensorelement
- 9: Bestandskante
- 9a: Bearbeiten-Bestandskante
- 9b: Referenz-Bestandskante
- 10: Spurbreite
- 11: Lenksystem
- 12: Lenkantrieb
- 13: Mensch-Maschine-Schnittstelle
- 14: Scheitelpunkt
- 15: Bogenabschnitt
- 16: erster Übergangsabschnitt
- 17: zweiter Übergangsabschnitt
- 18: Ausfahrabschnitt
- 19: Einfahrabschnitt

## Patentansprüche

1. Fahrerassistenzsystem für eine landwirtschaftliche Arbeitsmaschine (2) zum Bearbeiten einer einen Feldbestand (3) aufweisenden Fläche entlang von Arbeitsfahrspuren (4), wobei im Rahmen der Bearbeitung durch das Abfahren der Arbeitsfahrspuren (4) laufend eine neue Bestandskante (9) erzeugt wird, wobei eine Spurführungssteuerung (5) vorgesehen ist, die im Rahmen eines Wendevorgangs in einem Vorgewendebereich (6) zum sensorgestützten Abfahren einer Wendefahrspur (7) zwischen einer Ausgangs-Arbeitsfahrspur (4a) und einer hierzu versetzten Ziel-Arbeitsfahrspur (4b) mit entgegengesetzter Fahrtrichtung Lenkbefehle für die Arbeitsmaschine (2) erzeugt, wobei die Spurführungssteuerung (5) im Rahmen des Wendevorgangs Lenkbefehle für die Arbeitsmaschine (2) erzeugt, welche die Basis für das automatische Wenden der Arbeitsmaschine (2) bilden,
**dadurch gekennzeichnet,**
**dass** ein Bestandskantensensor (8) zum Erfassen von Bestandskanten (9) im Feldbestand (3) vorgesehen ist und dass die Spurführungssteuerung (5) im Rahmen des Wendevorgangs einen Ausrichtvorgang durchführt, in dem sie mittels des Bestandskantensensors (8) eine Referenz-Bestandskante (9b) des Feldbestands (3) erfasst und darauf basierend zum Ausrichten der Arbeitsmaschine (2) auf die Ziel-Arbeitsfahrspur (4b) Lenkbefehle für die Arbeitsmaschine (2) erzeugt, wobei ein Wende-Planungssystem vorgesehen ist, das aus der Lage der Ausgangs-Arbeitsfahrspur (4a) und der Ziel-Arbeitsfahrspur (4b) eine Plan-Wendefahrspur (7a) erzeugt und dass die Spurführungssteuerung (5) im Rahmen des Wendevorgangs die Plan-Wendefahrspur (7a) basierend auf der Erfassung der Referenz-Bestandskante (9b) auf die tatsächliche Lage der Ziel-Arbeitsfahrspur (4b) abgleicht, wobei die Plan-Wendefahrspur (7a) dem Wendevorgang zeitlich vorgelagert ermittelt wird, wobei die Referenz-Bestandskante (9b) die durch das im Rahmen der Bearbeitung erfolgte Abfahren der Ausgangs-Arbeitsfahrspur (4a) erzeugte Bestandskante (9) ist.

2. Fahrerassistenzsystem nach Anspruch 1, **dadurch gekennzeichnet, dass** die Spurführungssteuerung (5) im Rahmen des Bearbeitens des Feldbestands (3) das Abfahren der Arbeitsfahrspuren (4) auf globale Positionsinformationen eines insbesondere Satelliten-gestützten Navigationssystems stützt und im Rahmen des Wendevorgangs zum Ausrichten der Arbeitsmaschine (2) auf den lokal arbeitenden Bestandskantensensor (8) umschaltet.

3. Fahrerassistenzsystem nach Anspruch 1 oder 2, **dadurch gekennzeichnet, dass** die Spurführungssteuerung (5) im Rahmen des Bearbeitens des Feldbestands (3) zum sensorgestützten Abfahren von Arbeitsfahrspuren (4) entlang einer jeweiligen Bestandskante (9a) basierend auf der Erfassung der Bestandskante (9a) durch den Bestandskantensensor (8) Lenkbefehle für die Arbeitsmaschine (2) erzeugt.

4. Fahrerassistenzsystem nach einem der vorhergehenden Ansprüche, **dadurch gekennzeichnet, dass** ein der Arbeitsmaschine (2) zugeordnetes Lenksystem (11) mit einem Lenkantrieb (12) vorgesehen ist, der die erzeugten Lenkbefehle in Lenkbewegungen umsetzt.

5. Fahrerassistenzsystem nach einem der vorhergehenden Ansprüche, **dadurch gekennzeichnet, dass** eine Mensch-Maschine-Schnittstelle (13) vorgesehen ist, über die die erzeugten Lenkbefehle zur benutzerseitigen Umsetzung ausgebbar sind.

6. Fahrerassistenzsystem nach einem der vorhergehenden Ansprüche, **dadurch gekennzeichnet, dass** der Wendevorgang das Abfahren einer Wendefahrspur (7) mit einem Scheitelpunkt (14) umfasst, in dem sich der Fahrtrichtungsanteil entlang der Ausgangs-Arbeitsfahrspur (4a) umkehrt.

7. Fahrerassistenzsystem nach einem der vorhergehenden Ansprüche, **dadurch gekennzeichnet, dass** die Wendefahrspur (7) einen den Scheitelpunkt (14) umfassenden, insbesondere zumindest zum Teil kreisförmigen, Bogenabschnitt (15) aufweist.

8. Fahrerassistenzsystem nach einem der vorhergehenden Ansprüche, **dadurch gekennzeichnet, dass** sich der Bogenabschnitt (15) über einen ersten, insbesondere gebogenen, Übergangsabschnitt (16) an die Ausgangs-Arbeitsfahrspur (4a) anschließt und dass sich die Ziel-Arbeitsfahrspur (4b) über einen zweiten, insbesondere gebogenen, Übergangsabschnitt (17) an den Bogenabschnitt (15) anschließt.

9. Fahrerassistenzsystem nach einem der vorhergehenden Ansprüche, **dadurch gekennzeichnet, dass** sich der erste Übergangsabschnitt (16) an einen geraden Ausfahrabschnitt (18), in dem die Arbeitsmaschine (2) aus der Ausgangs-Arbeitsfahrspur (4a) ausfährt, anschließt und dass sich an den zweiten Übergangsabschnitt (17) ein gerader Einfahrabschnitt (19), in dem die Arbeitsmaschine (2) in die Ziel-Arbeitsfahrspur (4b) einfährt, anschließt.

10. Fahrerassistenzsystem nach einem der vorhergehenden Ansprüche, **dadurch gekennzeichnet, dass** die Spurführungssteuerung (5) den Ausrichtvorgang, insbesondere die Erfassung der Referenz-Bestandskante (9b), erst nach dem Überfahren des Scheitelpunkts (14) auslöst.

11. Fahrerassistenzsystem nach einem der vorhergehenden Ansprüche, **dadurch gekennzeichnet, dass** die Spurführungssteuerung (5) den Ausrichtvorgang, insbesondere die Erfassung der Referenz-Bestandskante (9b), im zweiten Übergangsabschnitt (14) auslöst.

12. Fahrerassistenzsystem nach einem der vorhergehenden Ansprüche, **dadurch gekennzeichnet, dass** der Bestandskantensensor (8) ein laserbasierter Abstandssensor ist.

13. Fahrerassistenzsystem nach einem der vorhergehenden Ansprüche, **dadurch gekennzeichnet, dass** der Bestandskantensensor (8) ein kamerabasierter Sensor ist.

14. Fahrerassistenzsystem nach einem der vorhergehenden Ansprüche, **dadurch gekennzeichnet, dass** das Wende-Planungssystem vorgesehen ist, das aus der Arbeitsbreite (2b) der Arbeitsmaschine (2), dem minimalen Lenkradius der Arbeitsmaschine (2) und der Lage der Ausgangs-Arbeitsfahrspur (4a) und der Ziel-Arbeitsfahrspur (4b) eine Plan-Wendefahrspur (7a) erzeugt und dass die Spurführungssteuerung (5) im Rahmen des Wendevorgangs die Plan-Wendefahrspur (7a) basierend auf der Erfassung der Referenz-Bestandskante (9b) auf die tatsächliche Lage der Ziel-Arbeitsfahrspur (4b) abgleicht.

15. Verfahren für den Betrieb einer landwirtschaftlichen Arbeitsmaschine (2) mittels eines Fahrerassistenzsystems (1), wobei eine Spurführungssteuerung (5) vorgesehen ist, mittels der im Rahmen eines Wendevorgangs in einem Vorgewendebereich (6) zum sensorgestützten Abfahren einer Wendefahrspur (7) zwischen einer Ausgangs-Arbeitsfahrspur (4a) und einer hierzu versetzten Ziel-Arbeitsfahrspur (4b) mit entgegengesetzter Fahrtrichtung Lenkbefehle für die Arbeitsmaschine (2) erzeugt werden, wobei im Rahmen der Bearbeitung durch das Abfahren der Arbeitsfahrspuren (4) laufend eine neue Bestandskante (9) erzeugt wird, wobei die Spurführungssteuerung (5) im Rahmen des Wendevorgangs Lenkbefehle für die Arbeitsmaschine (2) erzeugt, welche die Basis für das automatische Wenden der Arbeitsmaschine (2) bilden,
**dadurch gekennzeichnet,**
**dass** ein Bestandskantensensor (8) zum Erfassen von Bestandskanten (9) im Feldbestand (3) vorgesehen ist und dass im Rahmen des Wendevorgangs ein Ausrichtvorgang durchgeführt wird, in dem mittels des Bestandskantensensors (8) eine Referenz-Bestandskante (9b) des Feldbestands (3) erfasst wird und darauf basierend zum Ausrichten der Arbeitsmaschine (2) auf die Ziel-Arbeitsfahrspur (4b) Lenkbefehle für die Arbeitsmaschine (2) erzeugt werden, wobei ein Wende-Planungssystem vorgesehen ist, das aus der Lage der Ausgangs-Arbeitsfahrspur (4a) und der Ziel-Arbeitsfahrspur (4b) eine Plan-Wendefahrspur (7a) erzeugt und dass die Spurführungssteuerung (5) im Rahmen des Wendevorgangs die Plan-Wendefahrspur (7a) basierend auf der Erfassung der Referenz-Bestandskante (9b) auf die tatsächliche Lage der Ziel-Arbeitsfahrspur (4b) abgleicht, wobei die Plan-Wendefahrspur (7a) dem Wendevorgang zeitlich vorgelagert ermittelt wird, wobei die Referenz-Bestandskante (9b) die durch das im Rahmen der Bearbeitung erfolgte Abfahren der Ausgangs-Arbeitsfahrspur (4a) erzeugte Bestandskante (9) ist.

## Claims

1. A driver assistance system for an agricultural working machine (2) for cultivating an area with a field crop (3) along working tracks (4), wherein a new crop edge (9) is continuously produced by traversing the working tracks (4) in the context of cultivating, wherein a tracking control (5) is provided which produces steering commands for the working machine (2) in the context of a turning procedure in a headland zone (6) for sensor-supported traversing of a turning track (7) between an initial working track (4a) and a target working track (4b) with an opposing direction of travel which is offset thereto, wherein, in the context of the turning procedure, the tracking control (5) produces steering commands for the working machine (2) which form the basis for the automatic turning of the working machine (2),
**characterized in that**
a crop edge sensor (8) is provided in order to detect crop edges (9) in the field crop (3) and **in that** the tracking control (5) executes an orientation procedure in the context of the turning procedure, in which it detects a reference crop edge (9b) of the field crop (3) by means of the crop edge sensor (8) and based on this, produces steering commands for the working machine (2) in order to orientate the working machine (2) onto the target working track (4b), wherein a turning planning system is provided which produces a planned turning track (7a) from the position of the initial working track (4a) and of the target working track (4b) and **in that** in the context of the turning procedure, the tracking control (5) adjusts the planned turning track (7a) to the actual position of the target working track (4b) based on the detection of the reference crop edge (9b), wherein the planned turning track (7a) is determined temporally in advance of the turning procedure, wherein the reference crop edge (9b) is the crop edge (9) produced by the traversing of the initial working track (4a) which has taken place in the context of cultivating

2. The driver assistance system according to claim 1, **characterized in that** in the context of cultivating the field crop (3), the tracking control (5) bases traversing of the working tracks (4) on global positioning information from a navigation system, in particular a satellite-supported navigation system, and in the context of the turning procedure, switches to the crop edge sensor (8), which operates locally, in order to orientate the working machine (2).

3. The driver assistance system according to claim 1 or claim 2, **characterized in that** in the context of cultivating the field crop (3) for sensor-supported traversing of working tracks (4) along a respective crop edge (9a), the tracking control (5) produces steering commands for the working machine (2) based on the detection of the crop edge (9a) by means of the crop edge sensor (8).

4. The driver assistance system according to one of the preceding claims, **characterized in that** a steering system (11) is provided, which is associated with the working machine (2) and has a steering drive (12), which converts the steering commands which have been produced into steering movements.

5. The driver assistance system according to one of the preceding claims, **characterized in that** a man-machine interface (13) is provided, by means of which the steering commands which have been produced can be output for conversion by the user.

6. The driver assistance system according to one of the preceding claims, **characterized in that** the turning procedure comprises traversing a turning track (7) with an apex (14), in which the direction of travel component along the initial working track (4a) reverses.

7. The driver assistance system according to one of the preceding claims, **characterized in that** the turning track (7) has a curved section (15) which comprises the apex (14) and in particular is at least partially circular.

8. The driver assistance system according to one of the preceding claims, **characterized in that** the curved section (15) is contiguous with the initial working track (4a) via a first transition section (16), which in particular is curved, and **in that** the target working track (4b) is contiguous with the curved section (15) via a second, in particular curved, transition section (17).

9. The driver assistance system according to one of the preceding claims, **characterized in that** the first transition section (16) is contiguous with a straight outward travel section (18) in which the working machine (2) travels outwards from the initial working track (4a), and **in that** a straight inward travel section (19) is contiguous with the second transition section (17) in which the working machine (2) travels inwards into the target working track (4b).

10. The driver assistance system according to one of the preceding claims, **characterized in that** the tracking control (5) initiates the orientation procedure, in particular the detection of the reference crop edge (9b), only after travelling through the apex (14).

11. The driver assistance system according to one of the preceding claims, **characterized in that** the tracking control (5) initiates the orientation procedure, in particular the detection of the reference crop edge (9b), in the second transition section (14).

12. The driver assistance system according to one of the preceding claims, **characterized in that** the crop edge sensor (8) is a laser-based distance sensor.

13. The driver assistance system according to one of the preceding claims, **characterized in that** the crop edge sensor (8) is a camera-based sensor.

14. The driver assistance system according to one of the preceding claims, **characterized in that** the turning planning system is provided which produces a planned turning track (7a) from the working width (2b) of the working machine (2), from the minimum turning circle of the working machine (2) and from the position of the initial working track (4a) and the target working track (4b) and **in that** in the context of the turning procedure, the tracking control (5) adjusts the planned turning track (7a) to the actual position of the target working track (4b) based on the detection of the reference crop edge (9b).

15. A method for operating an agricultural working machine (2) by means of a driver assistance system (1), wherein a tracking control (5) is provided, by means of which steering commands are produced for the working machine (2) in the context of a turning procedure in a headland zone (6) for sensor-supported traversing of a turning track (7) between an initial working track (4a) and a target working track (4b) with an opposing direction of travel which is offset thereto, wherein a new crop edge (9) is continuously produced by traversing the working tracks (4) in the context of cultivating, wherein, in the context of the turning procedure, the tracking control (5) produces steering commands for the working machine (2) which form the basis for the automatic turning of the working machine (2),
**characterized in that**
a crop edge sensor (8) is provided in order to detect crop edges (9) in the field crop (3) and **in that** in the context of the turning procedure, an orientation procedure is carried out in which a reference crop edge (9b) of the field crop (3) is detected by means of the crop edge sensor (8) and based on this, steering commands are produced for the working machine (2) in order to orientate the working machine (2) onto the target working track (4b), wherein a turning planning system is provided which produces a planned turning track (7a) from the position of the initial working track (4a) and of the target working track (4b) and **in that** in the context of the turning procedure, the tracking control (5) adjusts the planned turning track (7a) to the actual position of the target working track (4b) based on the detection of the reference crop edge (9b), wherein the planned turning track (7a) is determined temporally in advance of the turning procedure, wherein the reference crop edge (9b) is the crop edge (9) produced by the traversing of the initial working track (4a) which has taken place in the context of cultivating

## Revendications

1. Système d'assistance à la conduite pour une machine de travail agricole (2) afin de travailler une surface comportant une culture en champ (3), le long de traces de roulement de travail (4), sachant que dans le cadre du travail, le parcours des traces de roulement de travail (4) a pour effet de générer en permanence un nouveau bord de culture (9), une commande de suivi de trace (5) étant prévue, laquelle génère, dans le cadre d'une manœuvre de retournement dans une zone de tournière (6), des instructions directionnelles pour la machine de travail (2) afin de parcourir, avec l'assistance de capteurs, une trace de roulement de retournement (7) entre une trace de roulement de travail de départ (4a) et une trace de roulement de travail de destination (4b) décalée par rapport à celle-ci et possédant un sens de roulement opposé, **caractérisé en ce qu'**un capteur de bord de culture (8) est prévu pour détecter des bords de culture (9) dans la culture en champ (3), et **en ce que** la commande de suivi de trace (5) effectue, dans le cadre de la manœuvre de retournement, une manœuvre d'orientation lors de laquelle elle détecte, au moyen du capteur de bord de culture (8), un bord de culture de référence (9b) de la culture en champ (3) et, sur la base de celui-ci, génère des instructions directionnelles pour la machine de travail (2) afin d'orienter la machine de travail (2) vers la trace de roulement de travail de destination (4b), un système de planification de retournement étant prévu, qui génère une trace de roulement de tournière planifiée (7a) à partir de la position de la trace de roulement de travail de départ (4a) et de la trace de roulement de travail de destination (4b), et **en ce que** la commande de suivi de trace (5), dans le cadre de la manœuvre de retournement, adapte la trace de roulement de tournière planifiée (7a) à la position réelle de la trace de roulement de travail de destination (4b), sur la base de la détection du bord de culture de référence (9b), la trace de roulement de tournière planifiée (7a) étant déterminée en amont dans le temps par rapport à la manœuvre de retournement, le bord de culture de référence (9b) étant le bord de culture (9) généré par le parcours de la trace de roulement de travail de départ (4a), effectué dans le cadre du travail.

2. Système d'assistance à la conduite selon la revendication 1, **caractérisé en ce que**, dans le cadre du travail de la culture en champ (3), la commande de suivi de trace (5) fait reposer le parcours des traces de roulement de travail (4) sur des informations de position globales d'un système de navigation, en particulier assisté par satellite, et, dans le cadre de la manœuvre de retournement, commute vers le capteur de bord de culture travaillant localement (8) pour orienter la machine de travail (2).

3. Système d'assistance à la conduite selon la revendication 1 ou 2, **caractérisé en ce que**, dans le cadre du travail de la culture en champ (3), la commande de suivi de trace (5) génère, pour parcourir avec l'assistance de capteurs des traces de roulement de travail (4) le long d'un bord de culture respectif (9a), des instructions directionnelles pour la machine de travail (2), sur la base de la détection du bord de culture (9a) par le capteur de bord de culture (8).

4. Système d'assistance à la conduite selon une des revendications précédentes, **caractérisé en ce qu'**il est prévu un système directionnel (11) associé à la machine de travail (2) et muni d'un moyen d'entraînement directionnel (12), lequel convertit les instructions directionnelles générées en mouvements directionnels.

5. Système d'assistance à la conduite selon une des revendications précédentes, **caractérisé en ce qu'**il est prévu une interface homme-machine (13) par l'intermédiaire de laquelle les instructions directionnelles générées peuvent être produites en vue d'une conversion côté utilisateur.

6. Système d'assistance à la conduite selon une des revendications précédentes, **caractérisé en ce que** la manœuvre de retournement inclut le parcours d'une trace de roulement de retournement (7) comportant un point de rebroussement (14) où la partie de sens de roulement le long de la trace de roulement de travail de départ (4a) s'inverse.

7. Système d'assistance à la conduite selon une des revendications précédentes, **caractérisé en ce que** la trace de roulement de retournement (7) comporte une portion arquée (15), en particulier au moins en partie circulaire, incluant le point de rebroussement (14).

8. Système d'assistance à la conduite selon une des revendications précédentes, **caractérisé en ce que** la portion arquée (15) se raccorde à la trace de roulement de travail de départ (4a) par l'intermédiaire d'une première portion de transition, en particulier arquée (16), et **en ce que** la trace de roulement de travail de destination (4b) se raccorde à la portion arquée (15) par l'intermédiaire d'une seconde portion de transition, en particulier arquée (17).

9. Système d'assistance à la conduite selon une des revendications précédentes, **caractérisé en ce que** la première portion de transition (16) se raccorde à une portion de sortie rectiligne (18) dans laquelle la machine de travail sort de la trace de roulement de travail de départ (4a), et **en ce qu'**à la seconde portion de transition (17) se raccorde une portion d'entrée rectiligne (19) dans laquelle la machine de travail (2) entre dans la trace de roulement de travail de destination (4b).

10. Système d'assistance à la conduite selon une des revendications précédentes, **caractérisé en ce que** la commande de suivi de trace (5) ne déclenche la manœuvre d'orientation, en particulier la détection du bord de culture de référence (9a), qu'après le franchissement du point de rebroussement (14).

11. Système d'assistance à la conduite selon une des revendications précédentes, **caractérisé en ce que** la commande de suivi de trace (5) déclenche la manœuvre d'orientation, en particulier la détection du bord de culture de référence (9b), dans la seconde portion de transition (14).

12. Système d'assistance à la conduite selon une des revendications précédentes, **caractérisé en ce que** le capteur de bord de culture (8) est un capteur de distance à laser.

13. Système d'assistance à la conduite selon une des revendications précédentes, **caractérisé en ce que** le capteur de bord de culture (8) est un capteur à caméra.

14. Système d'assistance à la conduite selon une des revendications précédentes, **caractérisé en ce qu'**il est prévu le système de planification de retournement qui génère une trace de roulement de tournière planifiée (7a) à partir de la largeur de travail (2b) de la machine de travail (2), du rayon de braquage minimal de la machine de travail (2) et de la position de la trace de roulement de travail de départ (4a) et de la trace de roulement de travail de destination (4b), et **en ce que**, dans le cadre de la manœuvre de retournement, la commande de suivi de trace (5) adapte la trace de roulement de tournière planifiée (7a) à la position réelle de la trace de roulement de travail de destination (4b), sur la base de la détection du bord de culture de référence (9b).

15. Procédé de fonctionnement d'une machine de travail agricole (2) au moyen d'un système d'assistance à la conduite (1), une commande de suivi de trace (5) étant prévue au moyen de laquelle sont générées, dans le cadre d'une manœuvre de retournement dans une zone de tournière (6), des instructions directionnelles pour la machine de travail (2) afin de parcourir, avec l'assistance de capteurs, une trace de roulement de retournement (7) entre une trace de roulement de travail de départ (4a) et une trace de roulement de travail de destination (4b) décalée par rapport à celle-ci et possédant un sens de roulement opposé, sachant que dans le cadre du travail, le parcours des traces de roulement de travail (4) a pour effet de générer en permanence un nouveau bord de culture (9), la commande de suivi de trace (5) générant, dans le cadre de la manœuvre de retournement, des instructions directionnelles pour la machine de travail (2), qui constituent la base pour le retournement automatique de la machine de travail (2), **caractérisé en ce qu'**un capteur de bord de culture (8) est prévu pour détecter des bords de culture (9) dans la culture en champ (3), et **en ce que**, dans le cadre de la manœuvre de retournement, est effectuée une manœuvre d'orientation lors de laquelle est détecté, au moyen du capteur de bord de culture (8), un bord de culture de référence (9b) de la culture en champ (3) et, sur la base de celui-ci, sont générées des instructions directionnelles pour la machine de travail (2) afin d'orienter la machine de travail (2) vers la trace de roulement de travail de destination (4b), sachant qu'il est prévu un système de planification de retournement qui génère une trace de roulement de tournière planifiée (7a) à partir de la position de la trace de roulement de travail de départ (4a) et de la trace de roulement de travail de destination (4b), et **en ce que** la commande de suivi de trace (5), dans le cadre de la manœuvre de retournement, adapte la trace de roulement de tournière planifiée (7a) à la position réelle de la trace de roulement de travail de destination (4b), sur la base de la détection du bord de culture de référence (9b), la trace de roulement de tournière planifiée (7a) étant déterminée en amont dans le temps par rapport à la manœuvre de retournement, le bord de culture de référence (9b) étant le bord de culture (9) généré par le parcours de la trace de roulement de travail de départ (4a), effectué dans le cadre du travail.
